(19) Europäisches Patentamt
European Patent Office
Office européen des brevets

(11) **EP 2 952 866 B1**

(12) **EUROPEAN PATENT SPECIFICATION**

(45) Date of publication and mention
of the grant of the patent:
**06.01.2021 Bulletin 2021/01**

(51) Int Cl.:
**G01N 3/42** (2006.01)    *G01L 1/06* (2006.01)
*G01L 5/00* (2006.01)

(21) Application number: **13873946.1**

(22) Date of filing: **28.02.2013**

(86) International application number:
**PCT/KR2013/001626**

(87) International publication number:
**WO 2014/119817 (07.08.2014 Gazette 2014/32)**

(54) **METHOD FOR EVALUATING RESIDUAL STRESS BY USING INSTRUMENTED INDENTATION TEST TECHNIQUE**

VERFAHREN ZUR BEWERTUNG VON RESTSPANNUNG DURCH INSTRUMENTIERTE EINKERBUNGSPRÜFTECHNIK

PROCÉDÉ DESTINÉ À ÉVALUER LA SOLLICITATION RÉSIDUELLE À L'AIDE D'UNE TECHNIQUE D'ESSAI DE DURETÉ PAR PÉNÉTRATION INSTRUMENTÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2013 KR 20130011379**

(43) Date of publication of application:
**09.12.2015 Bulletin 2015/50**

(73) Proprietor: **Frontics, Inc.**
**Seoul 151-742 (KR)**

(72) Inventors:
• **CHOI, Minjae**
**Seoul 151-019 (KR)**
• **KIM, Youngcheon**
**Seoul 151-019 (KR)**
• **KIM, Kwangho**
**Seongnam-si**
**Gyeonggi-do 462-827 (KR)**

(74) Representative: **Brevalex**
**95, rue d'Amsterdam**
**75378 Paris Cedex 8 (FR)**

(56) References cited:
**KR-A- 20110 055 316    KR-B1- 100 517 857**
**KR-B1- 100 736 436    KR-B1- 100 965 226**
**KR-B1- 100 985 601    KR-B1- 101 152 323**
**US-A- 6 155 104    US-A1- 2008 141 782**

• **SEUNG-KYUN KANG ET AL: "Correlation between the plastic strain and the plastic pileup of the instrumented indentation by utilizing the interrupted tensile test", MATERIALS SCIENCE AND ENGINEERING A: STRUCTURAL MATERIALS: PROPERTIES, MICROSTRUCTURES AND PROCESSING, vol. 535, 22 December 2011 (2011-12-22), pages 197-201, XP055295795, NL ISSN: 0921-5093, DOI: 10.1016/j.msea.2011.12.063**

## Description

### Technical Field

The present invention relates to a method of evaluating residual stress using an instrumented indentation test.

### Background Art

The existing methods of measuring or predicting a residual stress of a specimen have different advantages and disadvantages.

The destructive schemes such as perforation and saw-cutting have a limitation due to a destructive characteristic thereof, but are advantageous in that the destructive schemes require a reference state implying a state in which there is no stress.

Meanwhile, nondestructive schemes such as an X-ray diffraction scheme and an instrumented indentation technique have an advantage due to a nondestructive characteristic thereof, but have a disadvantage in that the nondestructive schemes measure a residual stress when there is no state in which a residual stress does not exist.

In order to overcome the limitation of such nondestructive schemes, researchers have constructed a lattice constant reference database using an X-ray diffraction scheme. When material information of a specimen is identified, a lattice interval between a state in which there is no residual stress and a state in which there is a residual stress can be compared with each other using reference data.

In the instrumented indentation research field, it is difficult to search for a research on which residual stress is measured when there is no state in which there is no residual stress. Chen et al. (X, Chen, J, Yan, A,M, Karlsson, Mater, Sci, Eng, A 416, 139 (2006)) propose a method of measuring a residual stress using a finite element method even when there is no state in which there is no residual stress. However, such a research also has a problem in that an actual experimental method of evaluating a residual stress without a reference state cannot be provided.

US2008/141782 discloses an evaluating method of a residual stress implementing the continuous indentation method.

US 6155104 discloses a determination of preexisting stresses based on indentation or other mechanical probing of material.

KR 100 965 226 discloses a residual stress measurement method using a continuous indentation test method

The article by S.-K. Kang et al., published in Material science and engineering, A 535 (2012), p.197 - 201 discloses a "Correlation between the plastic strain and the pastic pileup of the instrumented indentation by utilizing the interrupted tensile stress.

## Detailed Description of the Invention

### Technical Problem

The present invention has been conceived to solve the above-mentioned problem, and an aspect of the present invention is to provide a method of evaluating a residual stress using an instrumented indentation test, which can evaluate a residual stress even when there is no state in which there is no residual stress of a specimen.

The aspect of the present invention is not limited thereto, and other unmentioned aspects of the present invention may be clearly appreciated by those skilled in the art from the following descriptions.

### Technical Solution

The present invention is defined in claim 1. Further aspects of the invention can be found in the dependent claims.

### Advantageous Effects

An embodiment of the present invention can evaluate a residual stress even when there is no state in which there is no residual stress of a specimen.

### Brief Description of the Drawings

FIG. 1 illustrates a contact area of an indenter, which is measured in a compressive residual stress state and a tensile residual stress state;

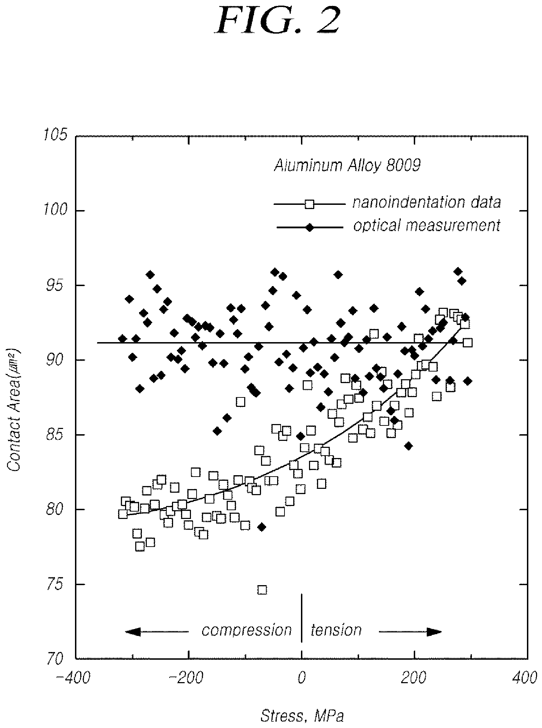

FIG. 2 illustrates an invariable contact area of an indenter regardless of a residual stress;

FIG. 3 is a graph depicting a comparison between actual contact areas of indenters of a film in a residual stress state and a film in a stress-free state;

FIG. 4 illustrates an invariable hardness and elastic modulus result values of Aluminum alloy 8009;

FIG. 5 is a graph depicting a comparison between an invariable hardness predicted by a finite element analysis method and hardness values calculated by an indentation load-indentation depth curve;

FIG. 6 is a graph depicting an invariable contact strength of Aluminum alloy 8009;

FIG. 7 schematically illustrates various indentation depths;

FIG. 8 is a graph depicting an amount of pile-up generated by various residual stresses;

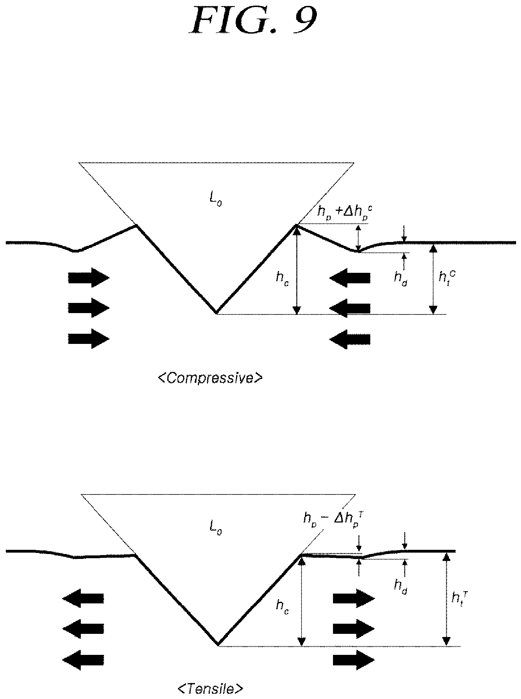

FIG. 9 schematically illustrates a contact form of an indenter under a compressive residual stress and a tensile residual stress;

FIG. 10 is a graph depicting an indentation load-indentation depth curve under a compressive residual stress;

FIG. 11 is a graph depicting a relationship between an actual contact depth and an experimentally measured indentation depth;

FIG. 12 is a graph depicting that there is the same difference between a maximum indentation depth and a final depth due to an invariable rigidity when there is a residual stress;

FIG. 13 is a graph depicting a comparison between a maximum indentation depth under a tensile residual stress and a maximum indentation depth under a state in which there is no residual stress;

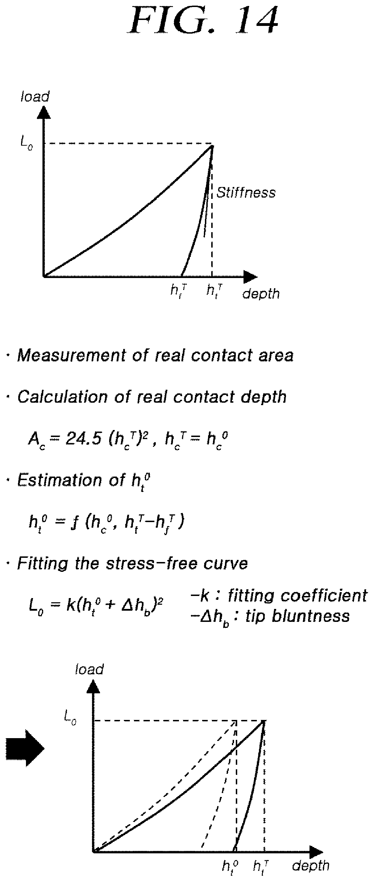

FIG. 14 is a view illustrating a prediction for each step of a state in which there is no residual stress;

FIG. 15 is a graph depicting an indentation load-indentation depth curve under various tensile residual stresses;

FIG. 16 is a graph depicting an indentation load-indentation depth curve and a residual stress under a uniaxial tensile residual stress;

FIG. 17 is a graph depicting an indentation load-indentation depth curve and a residual stress under a biaxial tensile residual stress;

FIG. 18 is a graph depicting an indentation load-indentation depth curve and a residual stress under an isodirectional biaxial tensile residual stress;

FIG. 19 is a graph depicting an indentation load-indentation depth curve and a residual stress under a uniaxial tensile residual stress;

FIG. 20 is a graph depicting an indentation load-indentation depth curve and a residual stress under a biaxial compressive residual stress;

FIG. 21 is a graph depicting an indentation load-indentation depth curve and a residual stress under a biaxial compressive residual stress;

FIG. 22 is a graph depicting a comparison between $h_t^0$ predicted under various residual stresses and $h_t^0$ measured under a stress-free state;

FIG. 23 is a graph depicting a comparison between a sum of stresses predicted under various residual stresses and applied stresses;

FIG. 24 is a graph depicting an indentation load-indentation depth curve in a state in which there is no residual stress, obtained by Equation (17), and an indentation load-indentation depth curve under a tensile residual stress while overlapping each other;

FIG. 25 is a perspective view illustrating an indentation test apparatus for performing an instrumented indentation test according to the present invention; and

FIGs. 26 and 27 are side sectional views illustrating a tester body.

## Mode for Carrying Out the Invention

Hereinafter, embodiments of the present invention will be described in detail with reference to the accompanying drawings. In the following description, the same components will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. These terms are merely used to distinguish one structural element from other structural elements, and a property, an order, a sequence and the like of a corresponding structural element are not limited by the term. It should be noted that if it is described in the specification that one component is "connected," "coupled" or "joined" to another component, a third component may be "connected," "coupled," and "joined" between the first and second components, although the first component may be directly connected, coupled or joined to the second component.

**<Experimental procedure>**

An instrumented indentation test has been carried out using an AIS 3000 system and a Vickers indenter. Materials used for tests are API X65. A stress generation jig is used to artificially apply uniaxial, biaxial, and iso-directional stresses. An instrumented indentation test has been performed in a state in which there is no residual stress, in order to compare maximum indentation depths $h_t^0$ in a stress-free state of a specimen (= state in which there is no residual stress), of an actual reference curve and an approximately calculated value, before stresses are applied artificially.

Next, instrumented indentation tests using a specimen in which a residual stress exists are carried out, and thereafter, indentation marks are measured optically. A model is verified which is developed to approximately calculate a residual stress using a measured contact area of an indenter and indentation parameters of a residual stress state, and estimate a state in which there is no residual stress by comparing an artificially applied residual stress with an estimated residual stress.

Here, the above-described AIS 3000 system (hereinafter, expressed as an indentation test apparatus) will be described below.

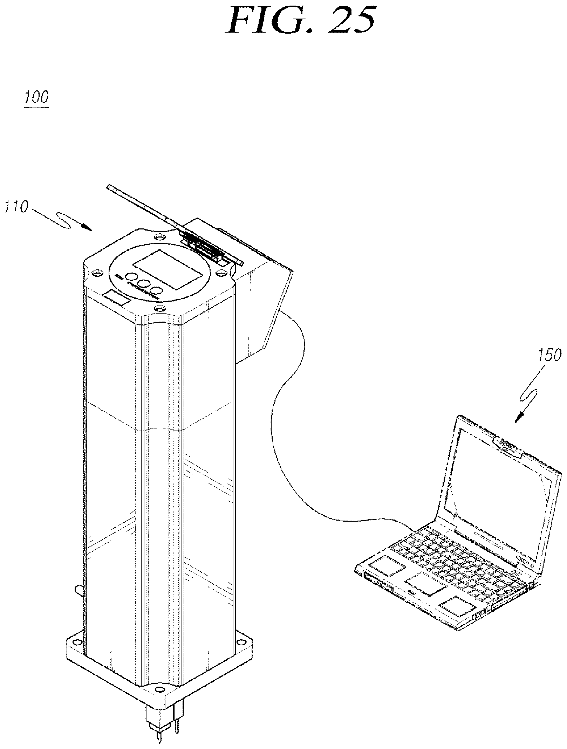

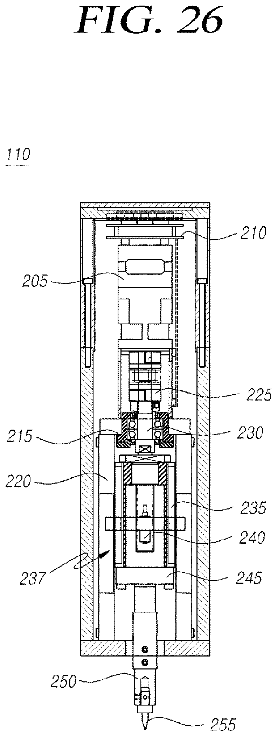

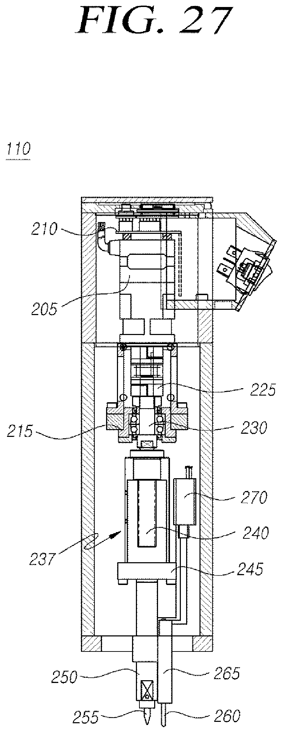

Referring to FIGs. 25 to 27, an indentation test apparatus 100 includes: a driver 205 installed inside a tester body 110; a ball screw 230 rotating while being connected to a shaft of the driver 205; a screw nut 215 coupled to the ball screw 230 by means of a ball; a slider 237 including a cylinder 235 sliding along a rotation shaft while interlocking with and being coupled to the screw nut 215; a slider guide 220 into which the slider 237 is inserted and which is coupled to the tester body 110 to guide the sliding of the slider 237; an indenter 255 coupled to a lower side of the slider 237 by means of an indenter holder 250 to interlock with the slider 237 so as to apply an indentation load to a measurement specimen; a load sensor 245 coupled to a lower side of the cylinder 235 to measure a load which is transferred to the measurement specimen by the indenter 255 during the sliding of the slider 237; a displacement sensor for measuring a depth by which the indenter 255 is indented into the measurement specimen during the sliding of the slider 237; a microcomputer 210 which is installed inside the tester body 110, is connected to the driver 205 via an interface, and independently controls the driver 205 using a control program transmitted from a main computer 150; and the main computer 150 which is wiredly or wirelessly connected to the microcomputer 210 to transmit the control program in which a testing condition is programmed, calculates a residual stress of the measurement specimen using a measurement value measured by the load sensor 245 and the displacement sensor, and makes a control to transmit a test termination signal to the microcomputer or terminate power supply to the driver 205 when the measurement value measured by the load sensor 245 and the displacement sensor deviates from a reference value.

The driver 205 is installed inside the tester body 110 and vertically moves the slider 237 and the indenter 255 coupled to the indenter holder 250. At this time, a DC stepping motor is used which is stable with respect to an external load and an overload, enables precise control, and can reduce an influence of a dangerous element such as external vibrations which may occur in an indentation testing site.

A decelerator, which reduces the moving speed of the indenter 255 to a low speed by a necessary amount and increases power when the indenter 255 is moved by power generated by the motor, is coupled to the driver 205.

The slider 237 includes: the ball screw 230 which rotates while being connected to a shaft of the driver 205 by a coupling 225; a screw nut 215 coupled to the ball screw 230 by means of a ball; and the cylinder 235 sliding along the rotation shaft while interworking with and being coupled to the screw nut 215.

Thus, when the driver 205 is operated, the ball screw 230 connected to the shaft of the driver 205 rotates, and at this time, the screw nut 215 coupled to the ball screw 230 by means of a ball vertically slides along the rotation shaft of the ball screw 230 while rotating, and the cylinder 235 indentedly coupled to a lower side of the screw nut 215 by means of a connection member, etc. moves vertically together.

The slider guide 220 for supporting the cylinder 235 when the cylinder 235 moves vertically is located outside the slider 237 to allow the slider 237 to be inserted therein, and guides the vertical sliding of the slider 237 while being fixedly coupled to the tester body 110.

Further, the maximum movement distance by which the cylinder 235 vertically moves is limited by a limitation sensor 240 installed inside the cylinder 235, and when the driver 205 is abnormally operated or the cylinder 235 is moved manually, the maximum movement distance of the cylinder is limited, so that the tester is protected.

The indenter 255 for applying an indentation load to the measurement specimen while being vertically moved during the operation of the driver 205 is coupled to the lower side of the slider 237 by means of the indenter holder 250 to interwork with the slider 237, and the load sensor 245 for measuring a load transferred to the measurement specimen by the indenter 255 is coupled to the lower side of the cylinder 235.

Here, a Vickers type indenter is employed as the indenter 255.

Further, the displacement sensor for measuring a depth by which the indenter 255 is indented into the measurement specimen during the sliding of the slider 237 is fixed to the tester body 260 while a sensor holder 265 for supporting a sensor tip 260 which moves together with the indenter 255 during the vertical moving of the indenter 255 is located on the side surface of the indenter holder 250, and a main sensor unit 270 for detecting a vertical moving distance of the sensor tip 260 is fixed to the interior of the tester body 110 to be connected to the main computer 150 via an interface.

The microcomputer 210 for independently controlling the driver 205 using the control program of the indenter test, transmitted from the main computer 150, is installed inside the tester body and is connected to the driver 205 via an interface, so as to perform a test in accordance with an initially transmitted testing condition even when programs embedded in the main computer 150 are not normally operated.

The main computer 150 is wiredly or wirelessly connected to the microcomputer 210 to transmit a control program (corresponding to a computer program which includes a method of evaluating a residual stress using an instrumented indentation testing method, described above, is recorded in a recording medium and is provided to the main computer 150) in which a testing condition is programmed, and calculates a residual stress of the measurement specimen using the measurement value measured by the load sensor 235 and the displacement sensor.

A jig (not illustrated) for fixing the measurement specimen can be coupled to a lower side of the instrumented indentation tester 100 having the microcomputer 210 embedded therein. At this time, the test can be performed by employing, as the jig, at least one of a V block, a U block, a chain, a flat magnet, a double curvature magnet, a flat electromagnet, and a curvature electromagnet.

**<Application example for estimating residual stress>**

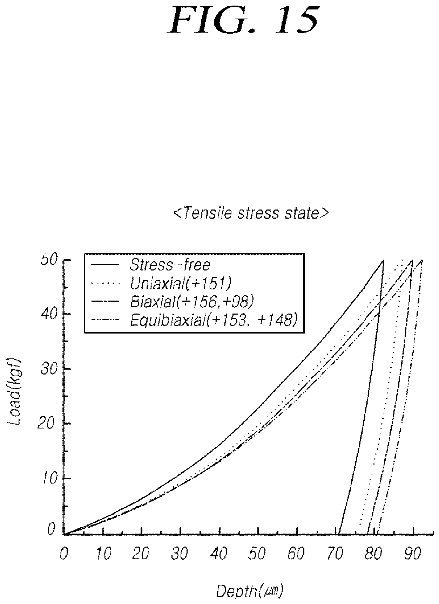

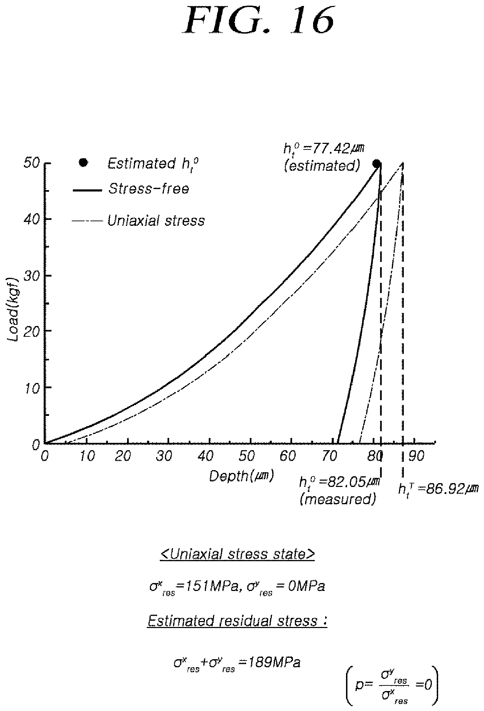

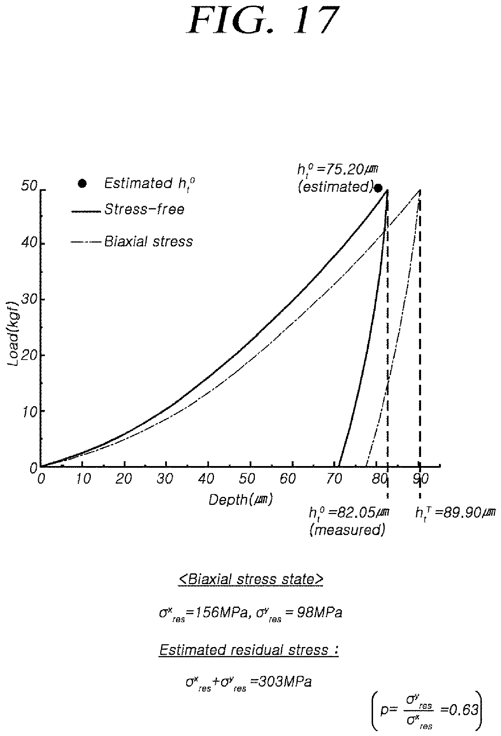

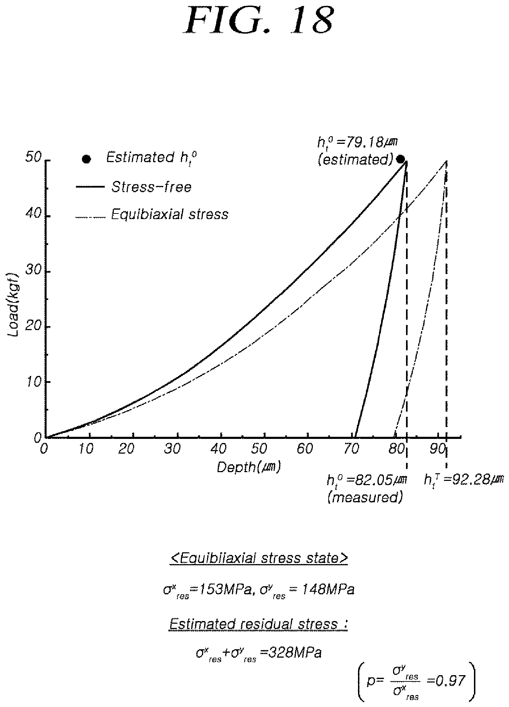

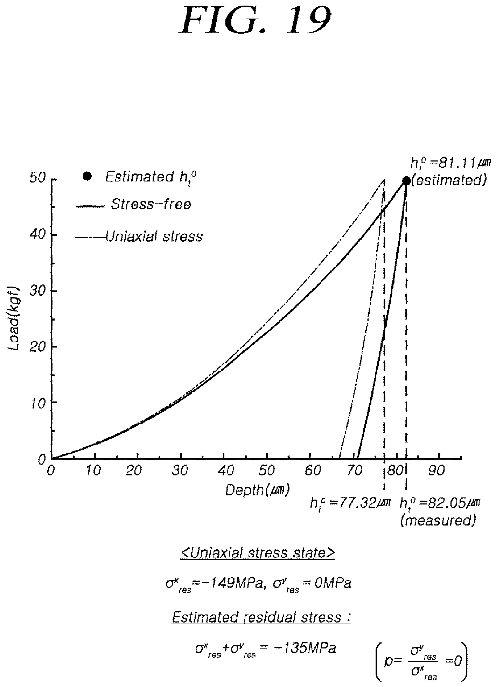

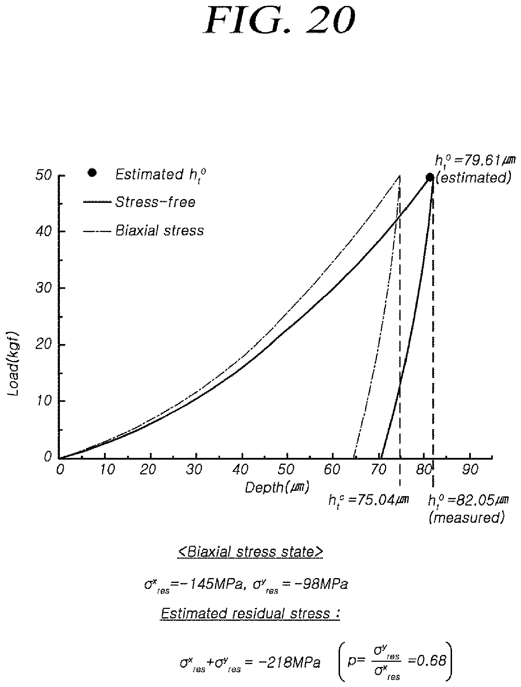

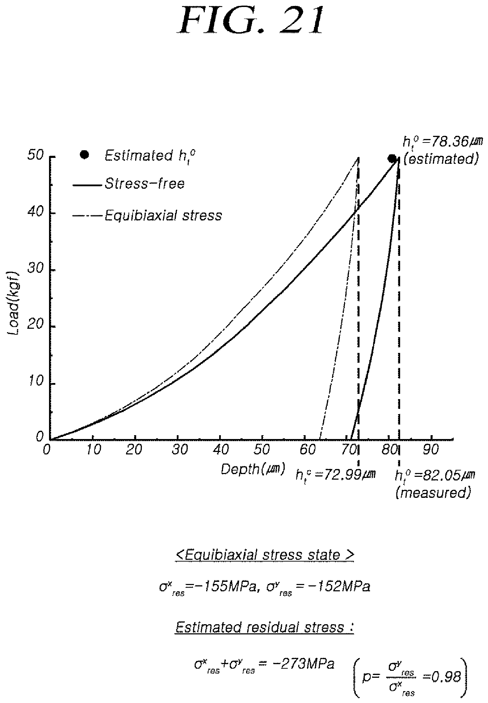

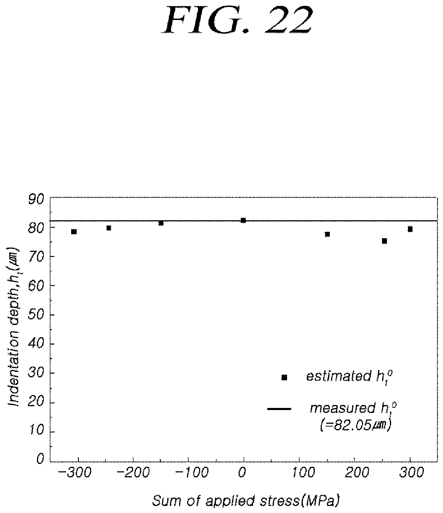

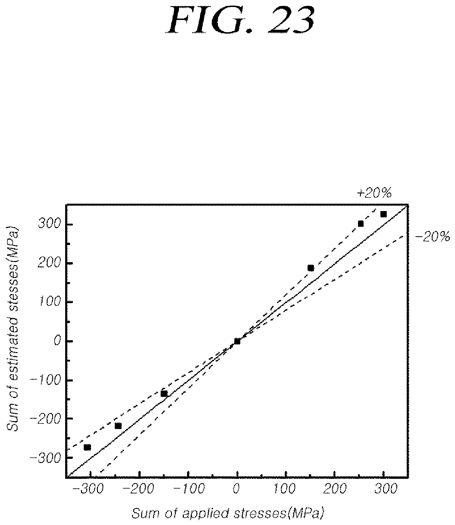

Uniaxial, biaxial, and iso-directional tensile residual stresses are artificially applied to estimate a tensile residual stress using the developed model. Further, instrumented indentation tests are carried out in a state in which there is no residual stress and in a state of each tensile residual stress, so as to obtain indentation load-indentation depth curves as illustrated in FIG. 15. Residual stresses are estimated using indentation parameters obtained by a residual stress state curve and an optically-measured contact area of an indenter. FIGs. 16 to 18 illustrate estimation residual stress values of uniaxial, biaxial, iso-directional biaxial tensile residual stress states, and FIGs. 19 to 21 illustrate estimation residual stress values of uniaxial, biaxial, iso-directional biaxial compressive residual stress states. All result values are summarized in FIGs. 22 and 23, and it has been identified that values calculated using the developed model considerably coincide with actually-measured values.

**<Invariable property irrelevant to residual stress>**

An indentation hardness analyzed from a change in an indentation load-indentation depth curve according to a residual stress of a specimen: The indentation load-indentation depth curve is moved according to the direction and the size of a residual stress inside the specimen. However, it has been identified that a change in an apparent indentation hardness resulting from a change in a residual stress is a result of incorrect optical measurement of an indentation mark (T.Y. Tsui, W.C. Oliver, G.M. Pharr, J. Mater. Res. 11, 752 (1996), A. Bolshakov, W.C. Oliver, G.M. Pharr, J. Mater. Res. 11, 760 (1996)).

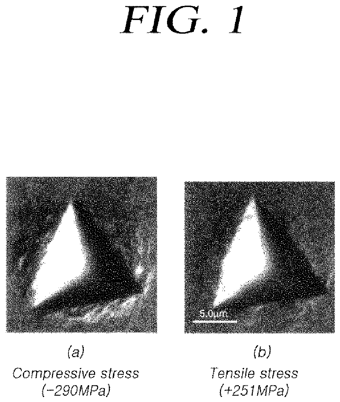

In a research on the influence of a planar residual stress to indentation plasticity, which investigates an indentation load-indentation depth curve and a shape of indentation marks of an indenter, it has been determined that a contact hardness is not changed regardless of elastically applied stress. As a result of indentation tests of a load control method carried out to a maximum indentation load, an indentation load-indentation depth curve is changed by a residual stress. However, as a result of optical measurement, an actual contact area of an indenter is not changed regardless of the residual stress. Tsui et al. (T.Y. Tsui, W.C. Oliver, G.M. Pharr, J. Mater. Res. 11, 752 (1996)) have observed actual contact areas under a compressive residual strss and a tensile residual stress. At this time, in each case, residual marks have nearly similar areas (see FIG. 1). Further, when a result of optically measuring a contact area of an indenter by implementing indentation tests in various residual stress states is compared with a contact area calculated using an Oliver-Pharr scheme, the contact area is consistent regardless of the residual stress state.

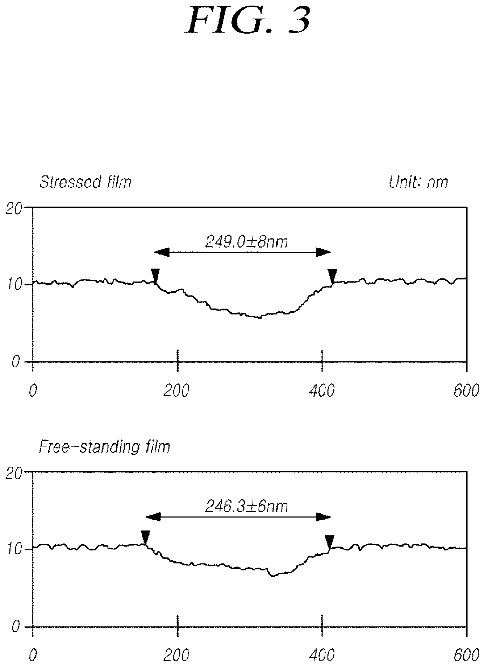

Further, when a contact area for a film in a state in which there is a residual stress is compared with a contact area for a film in a stress-free state (state in which there is no residual stress), the contact areas have similar diagonal lengths regardless of the residual stress (Y.H. Lee, D. Kwon, J. Mater. Res. 17, 901 (2002)) (see FIG. 3).

As a result, an actual contact area of an indenter may be defined to have an invariable value regardless of a residual stress state in the same indentation load state.

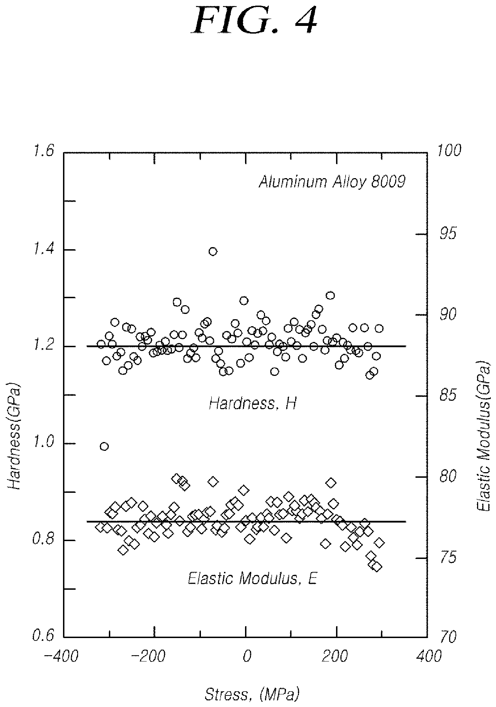

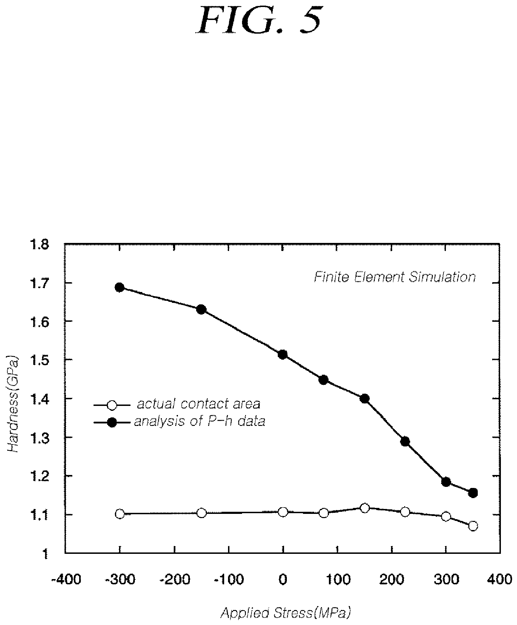

The description that a contact area is invariable in the same indentation load state implies that hardness is also invariable. The reason is that hardness is defined to be a ratio of an indentation load to a contact area. FIG. 4 illustrates result values of invariable hardness and an elastic coefficient. According to result values of a Finite Element Analysis (FEA) method, it can be identified that subsidence or pile-up occurring near a contact point in a state in which there is a residual stress plays an important role to have a contact hardness regardless of a residual stress (A. Bolshakov, G.M. Pharr, J. Mater. Res. 13, 1049 (1998), A. Bolshakov, W.C. Oliver, G.M. Pharr, J. Mater. Res. 11, 760 (1996)) (see FIG. 5).

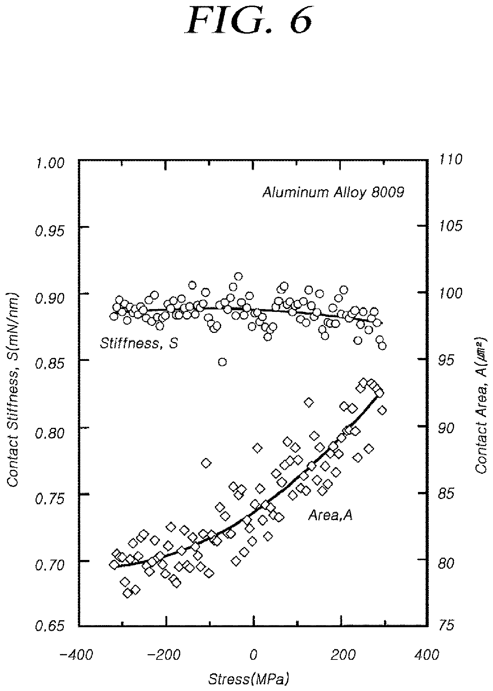

Rigidity is indicated as a function of an elastic coefficient and a contact area. It has been already described that these two parameters have an invariable characteristic regardless of a residual stress. Thus, the rigidity can be determined as an invariable parameter (see FIG. 6) .

The reason is that indentation properties such as hardness and a contact rigidity having an invariable characteristic have invariable values for an actual contact area regardless of a residual stress under the same indentation load. The contact area is obtained by calculating an actual contact depth using a geographical shape of a pointed indenter, and thus, it is necessary to identify a reason why the contact depth is not changed by a residual stress. Here, the calculating of the invariable contact is approached from a morphological aspect of an indentation contact.

When an indenter is penetrated into a specimen, a specimen moves to a free surface in order to conserve a volume. When the specimen is piled up, a contact depth of the indenter increases, and an actual contact depth ($h_c$) of the indenter is expressed as follows.

$$h_c = h_{\max} - h_d + h_{pile} \dots \dots (1)$$

Here, $h_{max}$ denotes a maximum indentation depth of an indenter, which is measured in experiment, $h_d$ denotes elastic deformation, and $h_{pile}$ (=$h_p$) denotes plastic pile-up. The elastic deformation is expressed as follows.

$$h_d = \varepsilon \frac{L_{\max}}{S} \dots \dots (2)$$

Further, in a case of pointed indentation, the plastic pile-up can be expressed as a function of a hardness H and an elastic coefficient C as follows.

$$h_{pile} = f(\frac{H}{E}) = f(\frac{W_e}{W_{total}}) \dots \dots (3)$$

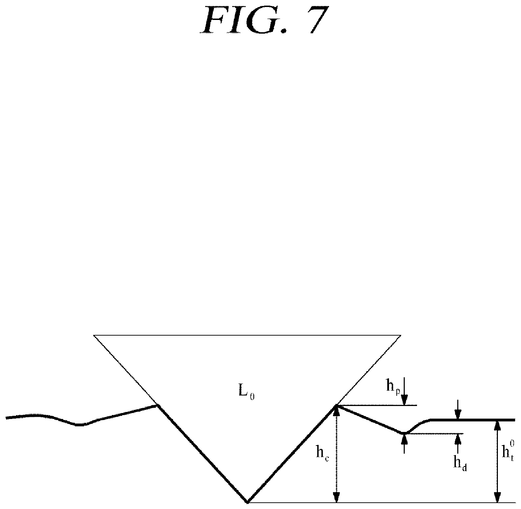

FIG. 7 illustrates $h_{max}$, $h_d$, $h_{pile}$, and $h_c$ in detail. In FIG. 7, $L_0$ denotes a given indentation load, and $h_t^o$ is the maximum indentation depth in a state in which there is no residual stress, which is measured in a state in which an indentation load is completely applied. $h_t^o$ displayed in the drawing has the same meaning as $h_{max}$ in the above-described equations.

The indentation load-indentation depth curves are moved according to a residual stress, and accordingly, an indentation depth is varied in the same indentation load. Here, the actual contact depth in a residual stress state can be defined in consideration of an amount of plastic pile-up.

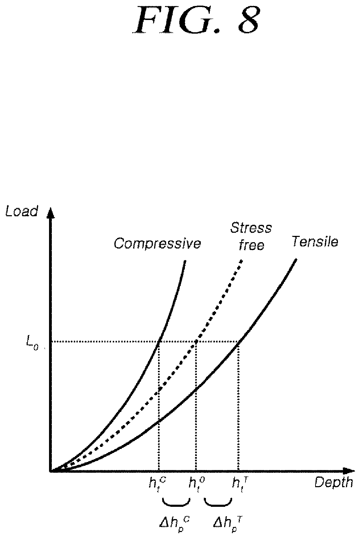

In FIG. 8, a difference in an indentation depth in the same load is generated by moving the indentation load-indentation depth curve by a compressive residual stress, and a quantitative change of plastic pile-up is determined by the difference. Applying the same principle, the quantitative change of plastic pile-up is determined by a difference in an indentation depth under a tensile residual stress. A change in a height of pile-up is defined by $\Delta h_p^C$ in a compressive residual stress and $\Delta h_p^T$ in a tensile residual stress, and $\Delta h_p^C$ and $\Delta h_p^T$ can be expressed as follows.

$$\Delta h_p^C = h_t^0 - h_t^C \dots \dots (4)$$

$$\Delta h_p^T = h_t^T - h_t^0 \dots \dots (5)$$

Here, $h_t^C$ denotes a maximum indentation depth of an indenter, which is experimentally measured in a compressive residual stress state, $h_t^T$ denotes a maximum indentation depth of an indenter, which is experimentally measured in a tensile residual stress state, and $h_t^0$ denotes a maximum indentation depth of an indenter in a state in which there is no residual stress as described above.

The fact that an invariable contact area is made regardless of a residual stress can be described using a change in a height of pile-up, which is generated by a residual stress, and a concept that an invariable height is made regardless of the residual stress. Here, an actual contact depth under a compressive residual stress is expressed as follows.

$$h_c^C = h_t^C + \Delta h_p^C - h_d + h_p \dots \dots (6)$$

Further, an actual contact depth under a tensile residual stress is expressed as follows.

$$h_c^T = h_t^T - \Delta h_p^T - h_d + h_p \dots \dots (7)$$

Here, $h_c^C$ denotes an actual contact depth of an indenter in a compressive residual stress state, and $h_c^T$ denotes an actual contact depth of an indenter in a tensile residual stress state. $h_d$ and $h_p$ are parameters varied according to a characteristic of a specimen. That is, these parameters are varied according to a residual stress. $h_t^C + \Delta h_p^C$ and $h_t^T - \Delta h_p^T$ are equal to $h_t^0$ as illustrated in FIG. 8.

Thus, $h_c^C$ in Equation (6) and $h_c^T$ in Equation (7) are equal to $h_c^0$ . This is because $h_c^0$ is expressed due to Equation (1) as follows.

$$h_c^0 = h_t^0 - h_d + h_p \dots \dots (8)$$

That is, this implies that Equation (9) is right, and it can be identified that an actual contact depth is invariable even when a residual stress remains.

$$h_c^0 = h_c^C = h_c^T = h_c \dots \dots (9)$$

**<Modeling for predicting state in which there is no residual stress>**

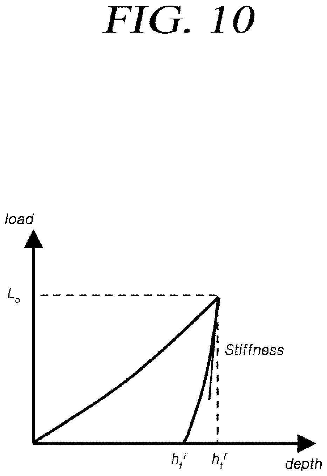

A basic concept of a new model for predicting a state in which there is no residual stress is to use a contact depth of an indenter, which is not varied regardless of a residual stress. When an indentation test for a specimen in which there is a tensile residual stress is performed, an indentation load-indentation depth curve for a specimen to which a tensile residual stress is applied can be obtained as illustrated in FIG. 10.

Here, a maximum indentation load $L_0$, a maximum indentation depth $h_t^T$ , a final depth $h_f^T$ , etc. can be calculated, and an actual contact area $A_c$ of an indenter can be calculated by optically measuring an indentation mark through an optical microscope, etc.

Further, the actual contact area of an indenter can be calculated using an equation for calculating an actual contact area of an indenter as expressed in Equation (10) as follows, an elastic coefficient, and rigidity.

$$A_c = (\frac{1}{\beta} \frac{\sqrt{\pi}}{2} \frac{S}{E_r})^2 \dots \dots 10)$$

Here, β denotes a correction factor, S denotes stiffness, and $E_r$ denotes an effective elastic coefficient.
Meanwhile, $E_r$ which is an effective elastic coefficient is expressed as follows.

$$\frac{1}{E_r} = \frac{\left(1-v^2\right)}{E} + \frac{\left(1-v_i^2\right)}{E_i} \ldots\ldots\ldots (11)$$

Here, E denotes an elastic coefficient of a specimen, v is a Poisson's ratio of a specimen, $E_i$ denotes an elastic coefficient of an indenter, and $v_i$ denotes a Poisson's ratio of an indenter.

Meanwhile, the actual contact area $A_C$ of an indenter can be estimated from the elastic coefficient E of a specimen. As an example, when 0.3 is substituted for a Poisson's ratio v of a steel material, the actual contact area $A_C$ of an indenter can be estimated from Equation (10) and Equation (11).

The actual contact depth $h_c^T$ of an indenter can be calculated using an equation for calculating an actual contact depth of an indenter, which is expressed by Equation (12) as follows, and a Vickers' shape.

$$A_c = 24.5\left(h_c^T\right)^2 \ldots\ldots\ldots (12)$$

Since the actual contact depth $h_c^T$ in a tensile residual stress state corresponds to a concept of an invariable contact depth, the actual contact depth $h_c^T$ is equal to the actual contact depth $h_c^0$ in a state in which there is no residual stress. Thus, the actual contact depth $h_c^0$ in a state in which there is no residual stress can be obtained even in a state in which there is a residual stress.

Research on an actual contact depth and an indentation depth which are experimentally measured when there is no residual stress has been performed (S.K. Kang, J.Y. Kim, C.P. Park, H.U. Kim, D. Kwon, J. Mater. Res. 25, 337 (2010)). Here, an equation for calculating an actual contact depth $h_c^0$ using experimentally measured parameters such as the maximum indentation depth $h_t^0$ and the final indentation depth $h_f^0$ in a state in which there is no residual stress is proposed as follows.

$$\frac{h_c^0}{h_t^0} = 9.9 \times 10^{-3} \frac{h_t^0}{h_t^0 - h_f^0} + 1.0 \ldots\ldots\ldots (13)$$

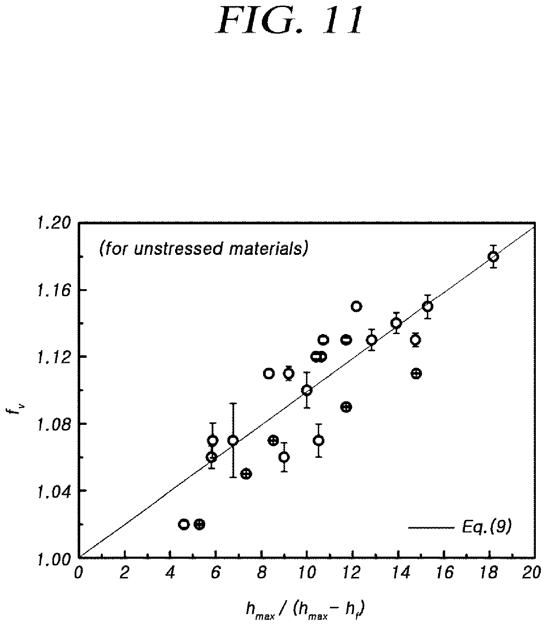

FIG. 11 illustrates such a relationship. $h_t^0$ can be calculated when $h_c^0$ and $h_t^0$ $h_f^0$ are identified. Actually, when there is a specimen in a state in which there no residual stress, such values can be easily measured through indentation tests. However, when there are only parameters in a state in which a residual stress exists, $h_t^0$ and $h_f^0$ cannot be calculated.

However, since the rigidity is not varied in spite of a residual stress due to the above description, $h_t^0$ $h_f^0$ can be estimated using this invariable rigidity.

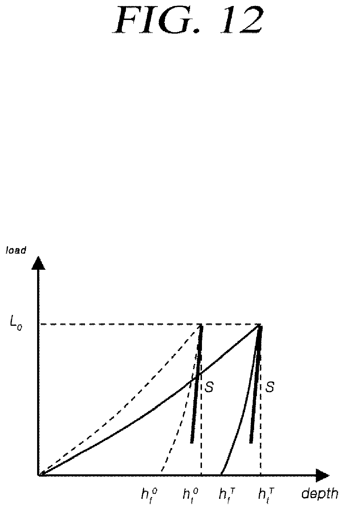

In FIG. 12, the same differences of the maximum indentation depth and the final depth can be discovered due to the invariable rigidity even though a residual stress remains.

$$h_t^0 - h_f^0 = h_t^T - h_f^T \ldots\ldots\ldots (14)$$

Thus, Equation (13) is expressed as an equation for calculating a maximum indentation depth of a stress-free state (= state in which there is no residual stress) as follows.

$$\frac{h_c^0}{h_t^0} = 9.9 \times 10^{-3} \frac{h_t^0}{h_t^T - h_f^T} + 1.0 \quad \cdots\cdots\cdots (15)$$

Here, $h_t^T$ $h_f^T$ can be easily measured by the indentation load-indentation depth curve as in FIG. 10, and $h_c^0$ can be estimated from $h_c^T$ using a concept of the invariable contact depth.

Thus, $h_t^0$ can be calculated using Equation (15).

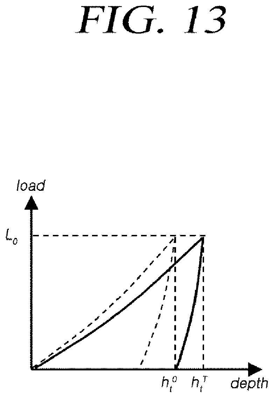

The calculated $h_t^0$ can be substituted into FIG. 10, and $h_t^0$ and $h_t^T$ can be then compared with each other as in FIG. 13.

As in Equation 16, a dotted indentation load-indentation depth curve in a state in which there is no residual stress can be obtained using Kick's Law and $h_t^0$ as in FIG. 13.

$$L_0 = k\left(h_t^0 + \Delta h_b\right)^2 \quad \cdots\cdots\cdots (16)$$

Here, $\Delta h_b$ is an item for correcting bluntness of a distal end of an indenter, and since $\Delta h_b$ is negligible as compared with $h_t^0$, Equation (16) is expressed as the following indentation load-indentation depth correlation equation.

$$L_0 = k\left(h_t^0\right)^2 \quad \cdots\cdots\cdots (16)$$

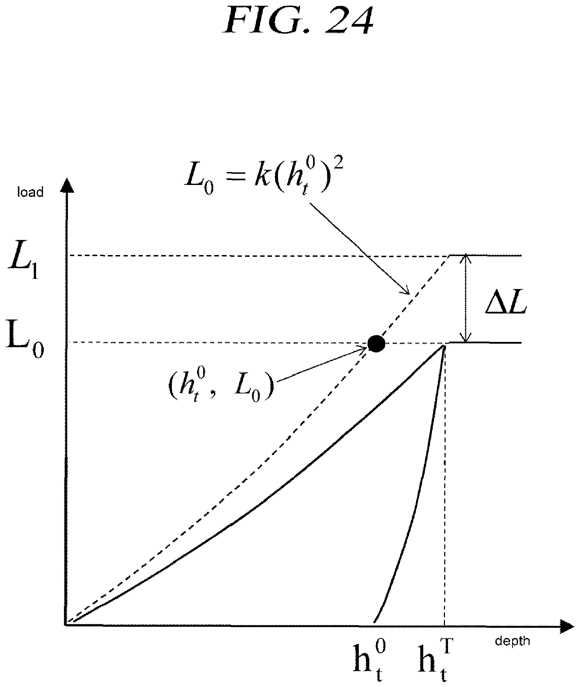

Here, k denotes a fitting coefficient.
Meanwhile, FIG. 24 is a graph depicting an indentation load-indentation depth curve in a state in which there is no residual stress, obtained by Equation (17), and an indentation load-indentation depth curve under a tensile residual stress while overlapping each other.

Herein, a load difference ($\Delta L = L_1 - L_0$) corresponding to the maximum indentation depth $h_t^0$ under a tensile residual stress can be calculated, and when the calculated value is substituted into a residual stress calculation equation expressed as Equation (18) as follows, a residual stress $(\sigma_{res}^x + \sigma_{res}^y)$ of a specimen can be calculated.

$$\sigma_{res}^x + \sigma_{res}^y = \frac{3}{\Psi}\frac{\Delta L}{A_c} \quad \cdots\cdots\cdots (18)$$

Here, $\Psi$ is a plastic restraint coefficient.
In accordance with an embodiment of the present invention, even when there is no state in which there is no residual stress of a specimen, a residual stress can be evaluated.
Even if it was described above that all of the components of an embodiment of the present invention are coupled as a single unit or coupled to be operated as a single unit, the present invention is not necessarily limited to such an embodiment. That is, at least two elements of all structural elements may be selectively joined and operate without departing from the scope of the present invention.
In addition, since terms, such as "including," "comprising," and "having" mean that one or more corresponding components may exist unless they are specifically described to the contrary, it shall be construed that one or more other components can be included. All the terms that are technical, scientific or otherwise agree with the meanings as understood by a person skilled in the art unless defined to the contrary. Common terms as found in dictionaries should be interpreted in the context of the related technical writings not too ideally or impractically unless the present disclosure expressly defines them so.

**Claims**

1. A method of evaluating a residual stress, the method comprising:

applying, to a specimen, a biaxial tensile residual stress including an uniaxial tensile residual stress or an iso-directional tensile residual stress, and then performing an instrumented indentation test using an indenter;

calculating a maximum indentation depth $h_t^0$ in a stress-free state of the specimen by substituting, into an equation for calculating a maximum indentation depth in a stress-free state, an actual contact depth $h_c^0$ in a stress-free state, obtained from actual contact depth $h_c^T$ of the indenter and a maximum indentation depth $h_t^T$ and a final depth $h_f^T$ under a maximum indentation load $L_0$ of the indenter, which are acquired from an indentation load-indentation depth curve obtained through the instrumented indentation test, said equation being:

$$\frac{h_c^0}{h_t^0} = 9.9 \times 10^{-3} \frac{h_t^0}{h_t^T - h_f^T} + 1.0 \ ;$$

acquiring an indentation load-indentation depth curve in a stress-free state by substituting the calculated maximum indentation depth $h_t^0$ in a stress-free state of the specimen into the following indentation load-indentation depth correlation equation: $L_0 = k\left(h_t^0\right)^2$ wherein k denotes a fitting coefficient, and calculating a load difference $\Delta L$ between a load $L_1$ corresponding to the maximum indentation depth $h_t^T$ in the indentation load-indentation depth curve in the stress-free state and the maximum indentation load $L_0$; and

calculating a residual stress $\sigma_{res}^x + \sigma_{res}^y$ of the specimen by substituting the calculated load difference $\Delta L$ into the residual stress calculation equation:

$$\sigma_{res}^x + \sigma_{res}^y = \frac{3}{\Psi} \frac{\Delta L}{A_c} \ ,$$

wherein $A_c$ denotes an actual contact area of the indenter and $\Psi$ denotes a plastic restraint coefficient.

2. The method of claim 1, wherein the actual contact depth $h_c^T$ of the indenter is calculated by substituting the actual contact area $A_c$ of the indenter into an equation for calculating an actual contact depth of the indenter.

3. The method of claim 2, wherein the actual contact area $A_c$ of the indenter is calculated using an equation,

$$A_c = (\frac{1}{\beta} \frac{\sqrt{\pi}}{2} \frac{S}{E_r})^2$$

wherein β denotes a correction factor, S denotes stiffness, and Er denotes an effective elastic coefficient.

4. The method of claim 3, wherein the equation for calculating an actual contact depth of the indenter is defined by an equation,

$$A_c = 24.5\left(h_c^T\right)^2 \ .$$

5. The method of claim 2, wherein the actual contact area $A_c$ of the indenter is calculated by optically measuring an indentation mark for the specimen of the indenter.

6. The method of claim 2, wherein the actual contact area $A_c$ of the indenter is calculated using an equation,

$$A_c = (\frac{1}{\beta} \frac{\sqrt{\pi}}{2} \frac{S}{E_r})^2 \,,$$

and
$E_r$ is calculated using an equation,

$$\frac{1}{E_r} = \frac{(1 \quad v^2)}{E} + \frac{(1 \quad v_i^2)}{E_i} \,,$$

wherein $\beta$ denotes a correction factor, S denotes stiffness, Er denotes an effective elastic coefficient, E denotes an elastic coefficient of the specimen, v denotes a Poisson's ratio of the specimen, Ei denotes an elastic coefficient of the indenter, and vi denotes a Poisson's ratio of the indenter.

**Patentansprüche**

1. Ein Verfahren zum Bewerten einer Eigenspannung, wobei das Verfahren aufweist:

Anwenden, auf eine Probe, einer zweiachsigen dehnbaren Eigenspannung einschließlich einer einachsigen dehnbaren Eigenspannung oder einer iso-gerichteten dehnbaren Eigenspannung, und dann Durchführen eines instrumentierten Eindrücktests unter Verwendung eines Stempels;
Berechnen einer maximalen Eindrücktiefe $h_t^0$ in einem spannungsfreien Zustand der Probe, indem in einer Gleichung zum Berechnen einer maximalen Eindrücktiefe in einem spannungsfreien Zustand eine tatsächliche Kontakttiefe $h_c^0$ in einem spannungsfreien Zustand, die von einer tatsächlichen Kontakttiefe $h_c^T$ des Stempels und einer maximalen Eindrücktiefe $h_t^T$ und einer finalen Tiefe $h_f^T$ unter einer maximalen Eindrückbelastung $L_0$ des Stempels erhalten ist, die von einer Eindrückbelastung-Eindrücktiefe-Kurve akquiriert sind, die durch den instrumentierten Eindrücktest erhalten ist, substituiert wird, wobei die Gleichung lautet:

$$h_c^0/h_t^0 = 9{,}9 \times 10^3 \cdot h_t^0 / (h_t^T - h_f^T) + 1{,}0;$$

Akquirieren einer Eindrückbelastung-Eindrücktiefe-Kurve in einem spannungsfreien Zustand, indem die berechnete maximale Eindrücktiefe $h_t^0$ in einem spannungsfreien Zustand der Probe in der folgenden Eindrückbelastung-Eindrücktiefe-Korrelationsgleichung substituiert wird: $L_0 = k \cdot (h_t^0)^2$, wobei k einen Anpassungskoeffizienten bezeichnet, und Berechnen einer Belastungsdifferenz $\Delta L$ zwischen einer Belastung $L_t$ korrespondierend zu der maximalen Eindrücktiefe $h_t^T$ in der Eindrückbelastung-Eindrücktiefe-Kurve in dem spannungsfreien Zustand und der maximalen Eindrückbelastung $L_0$; und
Berechnen einer Eigenspannung $\sigma_{res}^x + \sigma_{res}^y$ der Probe, indem die berechnete Belastungsdifferenz $\Delta L$ in der Eigenspannungsberechnungsgleichung substituiert wird:

$$\sigma_{res}^x + \sigma_{res}^y = 3/\psi \cdot \Delta L/A_c,$$

wobei $A_c$ ein tatsächliches Kontaktgebiet des Stempels bezeichnet, und $\psi$ einen formbaren Beschränkungskoeffizienten bezeichnet.

2. Das Verfahren nach Anspruch 1, wobei die tatsächliche Kontakttiefe $h_c^T$ des Stempels berechnet wird, indem das tatsächliche Kontaktgebiet $A_c$ des Stempels in einer Gleichung zum Berechnen einer tatsächlichen Kontakttiefe des Stempels substituiert wird.

3. Das Verfahren nach Anspruch 2, wobei das tatsächliche Kontaktgebiet $A_c$ des Stempels unter Verwendung einer Gleichung

$$A_c = (1/\beta \cdot \sqrt{\Pi}/2 \cdot S/E_r)^2$$

berechnet wird,
wobei $\beta$ einen Korrekturfaktor bezeichnet, S eine Steifigkeit bezeichnet, und $E_r$ einen effektiven elastischen Koeffizienten bezeichnet.

4. Das Verfahren nach Anspruch 3, wobei die Gleichung zum Berechnen einer tatsächlichen Kontakttiefe des Stempels durch eine Gleichung

$$A_c = 24,5 \cdot (h_c^T)^2$$

definiert ist.

5. Das Verfahren nach Anspruch 2, wobei das tatsächliche Kontaktgebiet $A_c$ des Stempels berechnet wird, indem eine Eindrückmarkierung für die Probe des Stempels optisch gemessen wird.

6. Das Verfahren nach Anspruch 2, wobei das tatsächliche Kontaktgebiet $A_c$ des Stempels unter Verwendung einer Gleichung

$$A_c = (1/\beta \cdot \sqrt{\Pi}/2 \cdot S/E_r)^2$$

berechnet wird, und
$E_r$ unter Verwendung einer Gleichung

$$1/E_r = (1 \cdot v^2)/E + (1 \cdot v_i^2)/E_i$$

berechnet wird,
wobei $\beta$ einen Korrekturfaktor bezeichnet, S eine Steifigkeit bezeichnet, $E_r$ einen effektiven elastischen Koeffizienten bezeichnet, E einen elastischen Koeffizienten der Probe bezeichnet, v ein Poisson-Verhältnis der Probe bezeichnet, $E_i$ einen elastischen Koeffizienten des Stempels bezeichnet, und $v_i$ ein Poisson-Verhältnis des Stempels bezeichnet.

**Revendications**

1. Procédé d'évaluation d'une contrainte résiduelle, le procédé comprenant :

l'application, à une éprouvette, d'une contrainte résiduelle de traction biaxiale comportant une contrainte résiduelle de traction uniaxiale ou une contrainte résiduelle de traction iso-directionnelle, puis la réalisation d'un essai instrumenté de dureté par pénétration à l'aide d'un pénétrateur;
le calcul d'une profondeur de pénétration maximale $h_i^0$ dans un état sans contrainte de l'éprouvette par substitution, dans une équation permettant de calculer une profondeur de pénétration maximale dans un état sans contrainte, d'une profondeur de contact réelle $h_c^0$ dans un état sans contrainte, obtenue à partir d'une profondeur de contact réelle $h_c^T$ du pénétrateur et d'une profondeur de pénétration maximale $h_i^T$ et d'une profondeur finale $h_f^T$ sous une charge de pénétration maximale $L_0$ du pénétrateur, qui sont acquises à partir d'une courbe de charge de pénétration-profondeur de pénétration obtenue par le biais de l'essai instrumenté de dureté par pénétration, ladite équation étant :

$$\frac{h_c^0}{h_i^0} = 9.9 \times 10^{-3} \frac{h_i^0}{h_i^T - h_f^T} + 1.0 \; ;$$

l'acquisition d'une courbe de charge de pénétration-profondeur de pénétration dans un état sans contrainte par substitution de la profondeur de pénétration maximale calculée $h_i^0$ dans un état sans contrainte de l'éprouvette dans l'équation de corrélation charge de pénétration-profondeur de pénétration suivante: $L_0 = k(hi^0)^2$ dans laquelle k désigne un coefficient d'ajustement, et le calcul d'une différence de charge $\Delta L$ entre une charge $L_i$ correspondant à la profondeur de pénétration maximale $h_i^T$ dans la courbe de charge de pénétration-profondeur de pénétration dans l'état sans contrainte et la charge de pénétration maximale $L_0$ ; et

le calcul d'une contrainte résiduelle $\sigma^x_{res} + \sigma^y_{res}$ de l'éprouvette par substitution de la différence de charge calculée $\Delta L$ dans l'équation de calcul de contrainte résiduelle :

$$\sigma^x_{res} + \sigma^y_{res} = \frac{3}{\Psi} \frac{\Delta L}{A_c} \; ,$$

dans laquelle $A_c$ indique une aire de contact réelle du pénétrateur et $\psi$ indique un coefficient de déformation plastique.

2. Procédé selon la revendication 1, dans lequel la profondeur de contact réelle $h_c^T$ du pénétrateur est calculée par substitution de l'aire de contact réelle $A_c$ du pénétrateur dans une équation permettant de calculer une profondeur de contact réelle du pénétrateur.

3. Procédé selon la revendication 2, dans lequel l'aire de contact réelle $A_c$ du pénétrateur est calculée à l'aide d'une équation,

$$A_c = (\frac{1}{\beta} \frac{\sqrt{\pi}}{2} \frac{S}{E_r})^2$$

dans laquelle $\beta$ désigne un facteur de correction, S désigne la raideur, et Er désigne un coefficient d'élasticité effectif.

4. Procédé selon la revendication 3, dans lequel l'équation permettant de calculer une profondeur de contact réelle du pénétrateur est définie par une équation,

$$A_c = 24.5(h_c^T)^2 \; .$$

5. Procédé selon la revendication 2, dans lequel l'aire de contact réelle $A_c$ du pénétrateur est calculée par la mesure optique d'une marque de pénétration pour l'éprouvette du pénétrateur.

6. Procédé selon la revendication 2, dans lequel l'aire de contact réelle $A_c$ du pénétrateur est calculée à l'aide d'une équation,

$$A_c = (\frac{1}{\beta} \frac{\sqrt{\pi}}{2} \frac{S}{E_r})^2 \; ,$$

et
$E_r$ est calculé à l'aide d'une équation,

$$\frac{1}{E_r} = \frac{\left(1 - v^2\right)}{E} + \frac{\left(1 - v_i^2\right)}{E_i},$$

dans lesquelles $\beta$ désigne un facteur de correction, S désigne la raideur, Er désigne un coefficient d'élasticité effectif, E désigne un coefficient d'élasticité de l'éprouvette, v désigne un nombre de Poisson de l'éprouvette, Ei désigne un coefficient d'élasticité du pénétrateur, et vi désigne un nombre de Poisson du pénétrateur.

$$\frac{1}{E_r} = \frac{\left(1 - v^2\right)}{E} + \frac{\left(1 - v_i^2\right)}{E_i},$$

# FIG. 1

(a)
Compressive stress
(−290MPa)

(b)
Tensile stress
(+251MPa)

# FIG. 2

# FIG. 3

*Stressed film*                                                    *Unit: nm*

*Free-standing film*

# FIG. 4

# FIG. 5

# FIG. 6

# FIG. 7

# FIG. 8

# FIG. 9

<Compressive>

<Tensile>

# FIG. 10

# FIG. 11

# FIG. 12

# FIG. 13

# FIG. 14

· Measurement of real contact area

· Calculation of real contact depth

$$A_c = 24.5 \ (h_c^T)^2, \ h_c^T = h_c^0$$

· Estimation of $h_t^0$

$$h_t^0 = f \ (h_c^0, \ h_t^T - h_f^T)$$

· Fitting the stress-free curve

$$L_0 = k(h_t^0 + \Delta h_b)^2 \qquad \begin{array}{l} -k : \textit{fitting coefficient} \\ -\Delta h_b : \textit{tip bluntness} \end{array}$$

# FIG. 15

\<Tensile stress state\>

# FIG. 16

<Uniaxial stress state>

$\sigma^x_{res} = 151MPa, \sigma^y_{res} = 0MPa$

Estimated residual stress :

$\sigma^x_{res} + \sigma^y_{res} = 189MPa$

$\left( p = \dfrac{\sigma^y_{res}}{\sigma^x_{res}} = 0 \right)$

# FIG. 17

<Biaxial stress state>

$\sigma^x_{res} = 156MPa$, $\sigma^y_{res} = 98MPa$

Estimated residual stress :

$\sigma^x_{res} + \sigma^y_{res} = 303MPa$

$$\left( p = \frac{\sigma^y_{res}}{\sigma^x_{res}} = 0.63 \right)$$

# FIG. 18

<Equibiaxial stress state>

$\sigma^x_{res} = 153MPa$, $\sigma^y_{res} = 148MPa$

Estimated residual stress :

$\sigma^x_{res} + \sigma^y_{res} = 328MPa$

$$\left( p = \frac{\sigma^y_{res}}{\sigma^x_{res}} = 0.97 \right)$$

# FIG. 19

$h_t^0 = 81.11 \mu m$
(estimated)

● Estimated $h_t^0$

—— Stress-free

—·—Uniaxial stress

Load(kgf): 50, 40, 30, 20, 10, 0

Depth($\mu m$): 0, 10, 20, 30, 40, 50, 60, 70, 80, 90

$h_t^0 = 77.32 \mu m$   $h_t^0 = 82.05 \mu m$
(measured)

<u>＜Uniaxial stress state＞</u>

$\sigma^x_{res} = -149 MPa, \quad \sigma^y_{res} = 0 MPa$

<u>Estimated residual stress :</u>

$\sigma^x_{res} + \sigma^y_{res} = -135 MPa \qquad \left( p = \dfrac{\sigma^y_{res}}{\sigma^x_{res}} = 0 \right)$

# FIG. 20

$h_t^0 = 79.61 \mu m$ (estimated)

- ● Estimated $h_t^0$
- —— Stress-free
- ——— Biaxial stress

Load(kgf) — 50, 40, 30, 20, 10, 0

Depth(μm) — 0, 10, 20, 30, 40, 50, 60, 70, 80, 90

$h_t^c = 75.04 \mu m$    $h_t^0 = 82.05 \mu m$ (measured)

<Biaxial stress state>

$\sigma^x_{res} = -145 MPa, \quad \sigma^y_{res} = -98 MPa$

Estimated residual stress :

$\sigma^x_{res} + \sigma^y_{res} = -218 MPa \quad \left( p = \dfrac{\sigma^y_{res}}{\sigma^x_{res}} = 0.68 \right)$

# FIG. 21

<Equibiaxial stress state >

$\sigma^x{}_{res} = -155MPa,\ \sigma^y{}_{res} = -152MPa$

Estimated residual stress :

$\sigma^x{}_{res} + \sigma^y{}_{res} = -273MPa$   $\left( p = \dfrac{\sigma^y{}_{res}}{\sigma^x{}_{res}} = 0.98 \right)$

# FIG. 22

# FIG. 23

# FIG. 24

$$L_0 = k(h_t^0)^2$$

$L_1$

$L_0$

$(h_t^0, L_0)$

$\Delta L$

load

depth

$h_t^0$ $h_t^T$

# FIG. 25

# FIG. 26

# FIG. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008141782 A
- US 6155104 A
- KR 100965226

**Non-patent literature cited in the description**

- **X, CHEN ; J, YAN ; A,M, KARLSSON.** *Mater, Sci, Eng,* 2006, vol. A 416, 139
- **S.-K. KANG et al.** *Material science and engineering,* 2012, vol. A 535, 197-201
- **T.Y. TSUI ; W.C. OLIVER ; G.M. PHARR.** *J. Mater. Res.,* 1996, vol. 11, 752
- **A. BOLSHAKOV ; W.C. OLIVER ; G.M. PHARR.** *J. Mater. Res.,* 1996, vol. 11, 760
- **Y.H. LEE ; D. KWON.** *J. Mater. Res.,* 2002, vol. 17, 901
- **A. BOLSHAKOV ; G.M. PHAR R.** *J. Mater. Res.,* 1998, vol. 13, 1049
- **S.K. KANG ; J.Y. KIM ; C.P. PARK ; H.U. KIM ; D. KWON.** *J. Mater. Res.,* 2010, vol. 25, 337